# FASCICULE DE BREVET EUROPEEN

(11) **EP 1 156 300 B1**
(45) Date de publication et mention de la délivrance du brevet: **10.12.2008**
(21) Numéro de dépôt: 01401083.9
(22) Date de dépôt: 26.04.2001
(51) Int. Cl.: G01F 11/04, G01F 11/16, G01F 11/08

(54) **Embout doseur et ensemble de distribution équipé d'un tel embout**
Dosieransatz und Behälter mit einem solchen Ansatz
Dosing tip and a container with such a dosing tip

(30) Priorité: 19.05.2000 FR 0006450
(43) Date de publication de la demande: 21.11.2001
(73) Titulaire: L'ORÉAL, 75008 Paris (FR)
(72) Inventeur: Bonningue, Philippe, 75020 Paris (FR)
(74) Mandataire: Boulard, Denis

(56) Documents cités:
- EP-A- 0 995 976
- WO-A-92/10727
- FR-A- 2 578 806
- US-A- 2 904 227
- US-A- 3 338 475
- US-A- 4 376 495
- US-A- 5 090 600

## Description

La présente invention a trait à un embout doseur pour la distribution sous forme de doses de volume prédéterminé, d'un produit fluide, notamment un produit cosmétique tel qu'un shampooing, un après shampooing, un gel, une lotion, un lait, etc. L'invention concerne également un ensemble de conditionnement et de distribution équipé d'un embout doseur selon la présente invention.

Dans le domaine de la cosmétique en particulier, bon nombre de produits capillaires, en particulier les shampooings, sont conditionnés dans des récipients à parois déformables dont le col est obturé par une paroi percée en son centre d'un ou plusieurs petits orifices pour la sortie du produit. Pour distribuer le produit, le récipient est retourné tête en bas. Une pression exercée sur les parois déformables du récipient permet de forcer le produit au travers du ou des orifices. Le produit est récupéré dans le creux de la main de celui ou celle qui l'utilise, et appliqué sur la chevelure. Ce geste simple ne permet pas toutefois, de doser la quantité de produit distribué.

Certes, il existe des dispositifs pour le dosage d'un produit à distribuer, mais, qui sont d'une complexité telle, que leur coût est totalement inadapté avec les impératifs économiques de certains circuits de distribution, en particulier la grande distribution.

Le brevet US-A-5 090 600 décrit un embout doseur du type comportant une chambre doseuse formée à l'intérieur d'un piston dont une extrémité libre est pourvue d'ouvertures aptes à permettre la sortie dosée du produit. Le dégagement des ouvertures de la chambre doseuse est obtenu au moyen d'une pression exercée par le produit sur une face du piston. Le produit s'écoule ensuite par gravité en position dégagée des ouvertures. Lors de la sortie du produit, l'élément de fermeture émerge de façon sensible hors de la chambre doseuse. Un tel embout est particulièrement approprié pour la distribution dosée de produits très liquides tels que des boissons. En revanche, un tel système peut difficilement être utilisé pour la distribution de produits visqueux, tels que couramment utilisés notamment dans le domaine de la cosmétique. En effet, la viscosité de ces produits, n'autorise pas un écoulement suffisamment rapide de la dose de produit, sous le seul effet de son poids.

Le brevet US-A-2 904 227 décrit un embout pour la distribution dosée d'un produit, comprenant une chambre de dosage à l'intérieur de laquelle est monté coulissant un piston. Le piston est traversé par un canal axial se terminant au voisinage de l'extrémité libre du piston par une portion radiale débouchant sur un orifice de sortie. En position de repos, l'orifice de sortie est obturé. Pour distribuer une dose de produit, l'orifice de sortie est dégagé sous la pression du produit s'exerçant sur le piston. Le produit circule au travers d'une portion radiale du canal, passe dans la partie axiale du canal, et sort au travers de l'orifice de sortie radial. Le passage obligé du produit au travers de ce canal axial ménagé à l'intérieur du piston, rend le dispositif tout particulièrement inadapté pour des forts débits, en particulier pour des produits à forte viscosité. De plus, un tel canal axial, est sujet à encrassement, en particulier après une longue période d'inutilisation, pouvant rendre le dispositif totalement inutilisable. Enfin, la distribution localisée du produit au creux de la main est des plus difficile à obtenir.

D'autres dispositifs doseurs sont également décrits dans les documents US-A-3 338 475, US-A-4 376 495, US-A-4 941 598, US-A-5 037 007, ou US-A-5 636 765. Tous ces dispositifs présentent un certain nombre de problèmes. Parmi ces problèmes figurent notamment le nombre de pièces relativement important, et la complexité qui en résulte, le coût de revient, la difficulté à l'utilisation, les problèmes d'étanchéité, la difficulté de distribuer une dose précise, etc..

Aussi, est-ce un des objets de l'invention que de fournir un embout doseur résolvant en tout ou partie, les problèmes discutés en référence aux dispositifs de la technique antérieure.

C'est en particulier un objet de l'invention que de fournir un embout doseur, facilement utilisable, et à faible coût de revient.

C'est un autre objet de l'invention que de fournir un embout doseur, particulièrement adapté à la distribution dosée de produits à forte viscosité.

C'est encore un autre objet de l'invention que de fournir un embout doseur, permettant la distribution dosée et localisée d'un produit sous pression.

D'autres objets encore apparaîtront dans la description détaillée qui suit.

Selon l'invention, ces objets sont atteints en réalisant un embout doseur, tel que défini dans la revendication 1.

Une telle configuration se distingue de manière substantielle de la configuration décrite dans la demande de brevet FR-A-2 578 806 selon laquelle c'est le second piston lui même qui fait office d'organe de fermeture. La configuration selon ce document est particulièrement désavantageuse en ce qu'elle rend difficile, voire interdit, une sortie axiale du produit.

De préférence, le premier piston est à position, au moins axiale, fixe par rapport à l'organe de fermeture. Avantageusement, le premier piston forme une seule pièce avec l'organe de fermeture, notamment obtenue de moulage.

Ainsi configuré, l'embout doseur est économique à réaliser. Il est simple et fiable d'utilisation, et peut être utilisé pour des produits à forte viscosité. Le produit est dosé de manière relativement précise, et sa distribution peut s'effectuer de manière très localisée au creux de la main.

Le degré d'étanchéité entre le bord périphérique des premier et second pistons et la surface intérieure du corps de l'embout doseur dépend dans une large mesure de la viscosité du produit, du degré d'inertie du système, jugé acceptable, et du confort recherché à la distribution. Plus le produit est liquide, plus un contact serré entre le bord périphérique et la surface interne est requis

Typiquement, le (ou les) passages(s) de sortie sont réalisés entre un élément de liaison à l'extrémité duquel est formé l'organe de fermeture, et une ouverture formée dans le second piston. Ainsi, il est possible dans une large mesure, en modifiant le nombre de passages et leur taille, de jouer sur les débits de sortie du produit. Dans le cas d'un élément de fermeture dont la section est en forme de croix, on définit quatre passages d'écoulement du produit. Cette flexibilité dans la configuration du, ou des passages de sortie autorise la distribution de produits ayant une viscosité choisie dans la gamme allant des produits très liquides aux produits très visqueux, tels que les shampooings ou les gels.

Le coût de revient est compatible avec les impératifs économiques de la grande distribution dans la mesure où un tel embout met en oeuvre un nombre de pièces limité dont la réalisation, notamment par moulage, n'implique pas l'utilisation de moules compliqués et coûteux. Typiquement, pour un shampooing, le volume de la chambre de dosage est de l'ordre de 5 ml.

De préférence, le récipient est à parois latérales déformables, la pression du produit sur le second piston, puis sur le premier étant obtenue par une pression exercée sur lesdites parois, des moyens permettant une entrée d'air dans le récipient lorsque cesse la pression sur les parois, de manière à compenser la diminution de volume de produit à l'intérieur du récipient, suite à la distribution d'une dose de produit. Ainsi, cette configuration offre l'avantage d'autoriser une gestuelle similaire à la gestuelle utilisée conventionnellement, en particulier dans le domaine de la cosmétique, et telle que discutée dans la première partie de la description.

Selon un mode de réalisation préférentiel, le (ou les) passage(s) d'entrée de la cavité doseuse est (sont) délimité(s) au moins en partie par le premier piston, la cavité doseuse étant en communication avec le récipient lors de la première phase du mouvement de la cavité doseuse, et isolée du récipient lors de la seconde, ledit (ou lesdits) orifice(s) de sortie étant fermé(s) lors de la première phase du mouvement, et ouvert(s) lors de la seconde.

Avec une telle configuration, et en raison de la hauteur axiale du (ou des) passages d'entrée, la cavité doseuse communique avec le récipient lors de toute ladite première phase du mouvement de la cavité doseuse. Une telle communication permet d'une part la progression du second piston dans le corps de la cavité doseuse, et d'autre part, un remplissage complet, ou "gavage" de ladite cavité doseuse, cette dernière étant arrangée de manière à ce que le (ou les) orifice(s) de sortie de la cavité doseuse soient obturés lors de cette première phase. La première phase du mouvement se poursuit jusqu'à ce que le second piston soit immobilisé axialement, laquelle immobilisation coïncide sensiblement avec l'interruption de la communication entre le récipient et la cavité doseuse. A ce moment, la pression s'exerce uniquement sur le premier piston solidaire de l'organe de fermeture, lequel dégage alors l'orifice de sortie de la cavité doseuse. Le produit sous la pression du premier piston, sort alors de la cavité doseuse.

Selon un mode de réalisation préférentiel, la cavité doseuse est disposée de façon annulaire tout autour d'un organe de liaison à l'extrémité duquel est fixé l'organe de fermeture, ledit organe de liaison étant centré sur l'axe X de la cavité doseuse. Avantageusement, ladite cavité est de section circulaire. Bien que la section circulaire soit préférée, toute autre section pourrait toutefois être utilisée. De même, il est possible de prévoir que l'élément de fermeture et l'organe de liaison ne soient pas centrés sur l'axe de la chambre de dosage.

L'embout doseur selon l'invention peut comprendre des moyens aptes à permettre, notamment par collage, claquage ou vissage, sa fixation sur un col formé par ledit récipient. Le montage peut également résulter d'un montage en force à l'intérieur du col du récipient. A titre préférentiel, l'embout doseur selon l'invention est obtenu de moulage d'un matériau thermoplastique, choisi notamment parmi les polypropylènes ou les polyéthylènes.

Avantageusement, l'organe de fermeture, ainsi que les premier et second pistons sont conçus de telle sorte que, lorsque la cavité doseuse retourne de la seconde à la première position, le premier piston entraîne le second. A cet effet, l'organe de fermeture, solidaire du premier piston, est formé à l'extrémité libre d'un élément de liaison traversant ledit second piston, et de section maximale inférieure à la section de l'orifice de sortie, ledit organe de fermeture étant quant à lui, de section plus grande que la section dudit orifice de sortie.

Avantageusement encore, des moyens de rappel élastiques peuvent être prévus pour, lorsque cesse la pression du produit sur le premier piston, rappeler la cavité doseuse dans ladite première position. Ces moyens de rappel qui, de préférence, sont constitués d'un ressort hélicoïdal, facilitent le fonctionnement de l'ensemble. Aucune manipulation n'est requise pour, après la distribution d'une dose, préparer l'ensemble pour la distribution d'une nouvelle dose.

Dans le cas d'un ressort hélicoïdal, une première extrémité du ressort peut être en appui contre l'organe de fermeture situé à l'extérieur de la cavité doseuse, l'autre extrémité du ressort prenant appui contre une paroi d'extrémité de l'embout doseur située en regard du second piston.

Selon un mode de réalisation spécifique, lors de la seconde phase du mouvement de la cavité doseuse, le second piston est immobilisé en translation par une butée formée par le corps de la cavité doseuse. Une telle butée peut s'étendre de manière continue sur toute la surface intérieure de la cavité doseuse, ou seulement de manière discontinue.

De préférence, l'organe de fermeture est conçu de manière à autoriser une reprise d'air à l'intérieur du récipient via le (ou les) orifice(s) de sortie de la cavité doseuse lorsque cette dernière retourne de la seconde position à la première. Ainsi, la reprise d'air s'effectue, lors du retour de la cavité doseuse dans la première position, par le (ou les) orifice(s) de sortie de la cavité doseuse, avant que celui-ci (ou ceux-ci) ne soit(ent) fermé(s) par l'organe de fermeture. On facilite ainsi la réalisation de l'ensemble, en s'affranchissant de la présence d'un circuit séparé pour la reprise d'air.

Selon un mode de réalisation préférentiel, le produit est distribué via au moins un orifice de distribution traversant une paroi d'extrémité du corps de l'embout doseur, disposée en regard du second piston, et à distance de ce dernier lorsque la cavité doseuse est dans la seconde position. La paroi d'extrémité est, de préférence, à distance telle du second piston, que lorsque la cavité doseuse est dans la seconde position, l'organe de fermeture soit au plus, au niveau de ladite paroi d'extrémité de l'embout doseur. Ainsi, en cours de distribution du produit, aucune portion de l'organe de fermeture n'émerge à l'extérieur du dispositif, ce qui contribue à maintenir une esthétique satisfaisante du dispositif.

De préférence, l'orifice de distribution est sensiblement dans l'alignement de l'orifice de sortie de la cavité doseuse.

Selon une autre caractéristique avantageuse de l'invention, une membrane élastiquement déformable est disposée dans l'orifice de distribution, ladite membrane comportant au moins une fente, fermée en l'absence de pression à l'intérieur de l'embout doseur, et apte à s'ouvrir en réponse à une pression exercée par le produit sortant de l'orifice de sortie de la cavité doseuse. La membrane peut être collée, claquée, ou soudée autour de l'orifice de distribution. Une telle membrane permet de maintenir l'orifice de distribution dans un état de propreté satisfaisant, et permet d'interrompre le flux de produit de manière instantanée.

A nouveau, le degré de fermeture de la fente dépend dans une large mesure de la viscosité du produit. Ainsi, en fonction de la viscosité du produit, les bords qui délimitent la fente pourront être plus ou moins jointifs, l'essentiel étant qu'ils soient suffisamment proches pour retenir le produit à l'intérieur de l'embout doseur.

Avantageusement, ladite membrane est apte, en réponse à une pression exercée par le produit sortant de l'orifice de sortie de la cavité doseuse, à occuper un profil convexe tourné vers l'extérieur de l'embout doseur, et, par un phénomène d'aspiration lorsque la cavité doseuse retourne de la seconde position à la première, à se retourner pour occuper un profil convexe tourné vers l'intérieur du récipient. Lors de ce retournement de la membrane vers l'intérieur de l'embout doseur, une entrée d'air à destination du récipient s'effectue. En effet, le retournement de la membrane confère à la fente une orientation propre à autoriser l'entrée d'air à l'intérieur de l'embout doseur et à empêcher toute sortie intempestive de produit.

Une telle membrane peut être réalisée en un matériau choisi parmi les élastomères thermoplastiques ou réticulés, notamment, les silicones, les latex naturels ou synthétiques, les EPDM, les polyuréthanes, les mélanges de polypropylène et de SBS, SEBS, ou EPDM, les polyéthylènes de très basse densité, les mélanges à base de polyesters glycols (TPU) ou de polyéther glycols (PEBA et COPE), les chlorures de polyvinyle souples (PVC).

Selon un autre aspect de l'invention, on réalise également un ensemble pour le conditionnement et la distribution dosée d'un produit (P), notamment cosmétique, comprenant un récipient formé d'un corps dont une extrémité est fermée par un fond, l'autre extrémité formant un col dont un bord libre délimite une ouverture, un embout doseur selon l'invention étant monté fixement sur ledit col. Le récipient peut se présenter sous forme d'un tube, ou d'un flacon. Sa section peut être quelconque, en particulier ovale, elliptique ou circulaire. Un capuchon peut être prévu pour, notamment en position de stockage, recouvrir de manière amovible ledit embout doseur. Avantageusement, l'embout doseur est monté dans l'axe du récipient. Toutefois, il ne s'agit pas là d'une caractéristique nécessaire. Dans certains cas il peut être souhaitable de monter l'embout doseur avec un angle par rapport à l'axe du récipient, afin d'améliorer le taux de vidange du récipient.

Le corps du récipient peut présenter des parois aptes à s'écraser lorsqu'une pression (F) est exercée sur le récipient, de façon sensiblement perpendiculaire auxdites parois, et à revenir à leur forme initiale lorsque cesse ladite pression.

D'autres moyens toutefois, notamment un piston, pourraient être envisagés pour pressuriser le produit en vue d'en forcer la sortie au travers de l'embout doseur.

Un tel ensemble est particulièrement adapté pour le conditionnement et la distribution dosée d'un produit cosmétique, notamment un shampooing, un après-shampooing, un gel de coiffage, un lait, ou une crème de soin.

L'invention consiste, mises à part les dispositions exposées ci-dessus, en un certain nombre d'autres dispositions qui seront explicitées ci-après, à propos d'exemples de réalisation non limitatifs, décrits en référence aux figures annexées, parmi lesquelles:
- les figures 1A-1B illustrent un récipient équipé d'un embout doseur selon la présente invention. Dans la figure 1A, le récipient est en position de repos. A la figure 1B, le récipient est en position de distribution.
- la figure 2 représente une vue en coupe axiale d'un mode de réalisation de l'embout doseur selon l'invention; et
- les figures 3A-3D illustrent les différentes étapes du fonctionnement de l'embout distributeur de la figure 2.

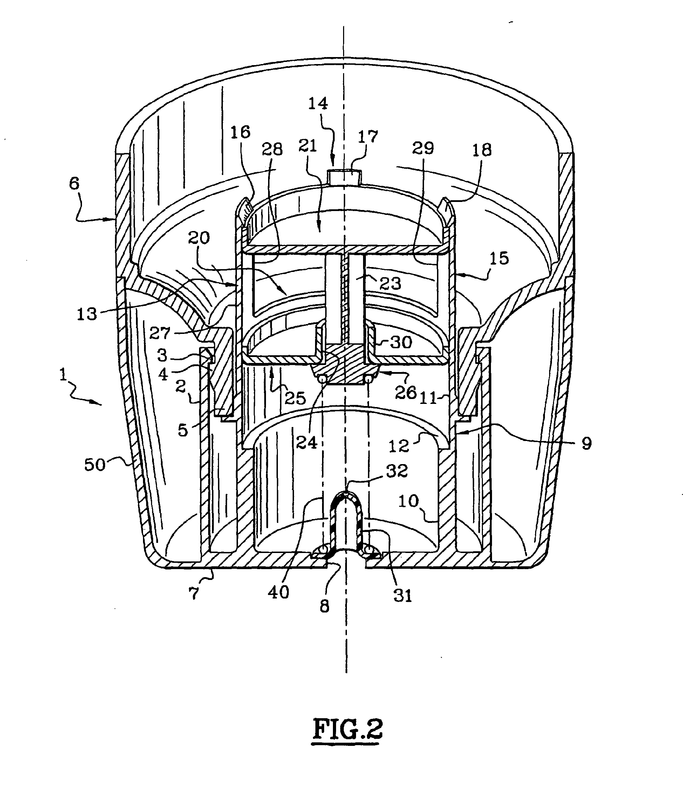

L'embout 1 représenté à la figure 2, comprend une jupe d'habillage 50 et une jupe d'accrochage 2 dont la surface interne comprend un bourrelet 3 apte à coopérer par encliquetage avec un bourrelet correspondant 4 formé sur la surface extérieure du col 5 d'un récipient 6 (représenté en position tête en bas), notamment un flacon à parois déformables.

Une extrémité des jupes d'accrochage 2 et d'habillage 50, est fermée par une paroi transversale 7 percée en son centre d'un orifice de distribution 8. L'embout doseur 1 comprend en outre une jupe 9 d'axe X, concentrique avec la jupe latérale 2, de diamètre légèrement inférieur au diamètre intérieur du goulot 5 de manière à s'insérer de façon serrante à l'intérieur dudit goulot. Une lèvre d'étanchéité (non représentée) peut parfaire l'étanchéité du montage de l'embout doseur 1 sur le récipient 6. La jupe 9 comprend principalement trois portions distinctes. La première portion 10, a une première extrémité solidaire de la paroi d'extrémité 7, et une seconde extrémité, opposée à la première. La seconde extrémité de la première portion 10 est reliée à une première extrémité d'une deuxième portion de la jupe latérale 9. La deuxième portion 11 est de diamètre interne supérieur au diamètre interne de la première portion 10 de manière à ce qu'un épaulement 12 soit formé entre les première et seconde portions. L'extrémité de la seconde portion 11, opposée à l'épaulement 12 se prolonge par une pluralité de pattes 13, 14, 15, espacées de manière régulière de manière à délimiter une pluralité d'échancrures tout autour de la jupe 9. Chacune des pattes 13, 14, 15 se termine par un bourrelet 16, 17, 18, tourné vers l'intérieur de la jupe 9, et formant une pluralité de butées pour une cavité doseuse 20, montée à coulisse à l'intérieur de la jupe 9 et dont on reparlera plus en détail par la suite. Dans le mode de réalisation illustré, les pattes 13, 14, 15, la portion 10, et la portion 11 s'étendent chacune respectivement, sur environ un tiers de la hauteur axiale de la jupe 9.

La cavité doseuse 20 qui va maintenant faire l'objet d'une description détaillée comprend un premier piston 21 dont le bord périphérique est apte à être guidé par les pattes 13, 14, 15, et à coulisser de manière plus ou moins étanche en appui contre la surface intérieure de la portion 11 de la jupe 9, laquelle jupe 9 forme un corps fixe pour l'embout doseur. Le jeu existant entre le bord périphérique du piston 21 et la surface interne de la portion 11 de la jupe 9, dépend de la viscosité du produit, et du confort recherché à la distribution. Plus la viscosité est importante, et plus le jeu pourra être important. Les bourrelets 16, 17, 18 assurent la retenue du piston 21 à l'intérieur de la jupe 9. Du côté du piston 21 opposé au récipient 6, le piston est solidaire d'un organe de fermeture 26 formé à l'extrémité d'un élément de liaison 23 dont la section est en forme de croix. L'élément de liaison 23 traverse un orifice de sortie 24 formé sensiblement au centre d'un second piston 25 dont le bord périphérique est également apte à coulisser de manière sensiblement étanche en appui contre la surface interne de la portion 11 de la jupe 9. La section maximale de l'organe de fermeture 26 est inscrite dans un cercle de diamètre supérieur au diamètre du cercle dans lequel est inscrit l'orifice de sortie 24 traversant le piston 25. L'organe de fermeture 26 est monté par exemple par encliquetage sur l'extrémité libre de élément de liaison 23, et est disposé du côté du piston 25 tourné en direction de la paroi d'extrémité 7.

Le montage des pistons 21 et 25 à l'intérieur de la jupe 9 de l'embout doseur 1 est rendu possible par la déformabilité élastique des pattes 13, 14, 15.

En l'absence de pression suffisante exercée par le produit sur le piston 25, et sous l'action d'un ressort de rappel 40 disposé entre la paroi d'extrémité 7 et l'organe de fermeture 26, ce dernier, de même que le premier piston 21 auquel il est solidaire via l'élément de liaison 2, et de même que le second piston 25 auquel il est couplé de manière partielle, sont contraints dans la direction opposée à la paroi d'extrémité 7 jusqu'à ce que le piston 21 soit en butée contre les bourrelets 16, 17, 18. Dans cette position, le piston 25 est au voisinage de l'extrémité supérieure de la portion 11 de la jupe 9, l'orifice central 24 du piston 25 étant obturé de manière étanche par l'organe de fermeture 26. Le piston 21, quant à lui, délimite avec les pattes 13, 14, 15 une pluralité de passages d'entrée 27, 28, 29, lesquelles dans cette position du piston 21, assurent la communication entre la cavité doseuse 20 et l'intérieur du récipient.

La hauteur maximale des orifices ou passages d'entrée 27, 28, 29 correspond sensiblement à la hauteur (sous les bourrelets 16, 17, 18) des pattes d'accrochage 13, 14, 15, minorée de l'épaisseur du piston 21 et de la hauteur de son rebord périphérique. Typiquement, cette hauteur maximale est de l'ordre de quelques millimètres. A titre d'exemple, les passages d'entrée ont une hauteur axiale qui est de l'ordre de 10 mm. La hauteur de l'élément de liaison 23 correspond sensiblement à la hauteur maximale des passages d'entrée 16, 17, de sorte que en position haute de la cavité doseuse 20 (telle que représentée à la figure 2), le piston 25 soit au voisinage de l'extrémité supérieure de la portion 11 de la jupe 9, et de sorte que l'ouverture de l'orifice de sortie 24 se produise sensiblement au même moment que la fermeture des passages d'entrée 27, 28, 29.

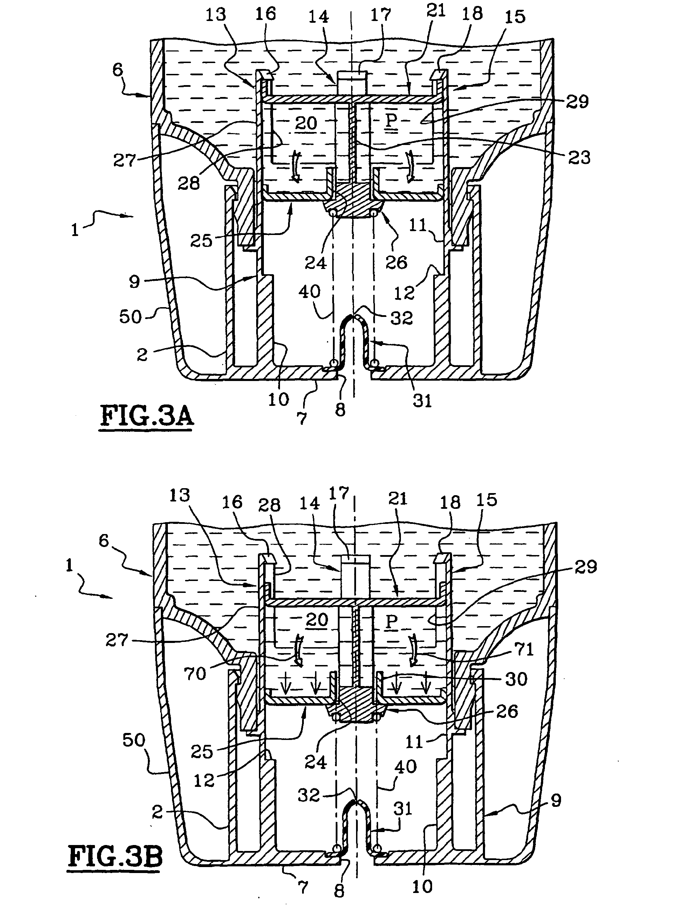

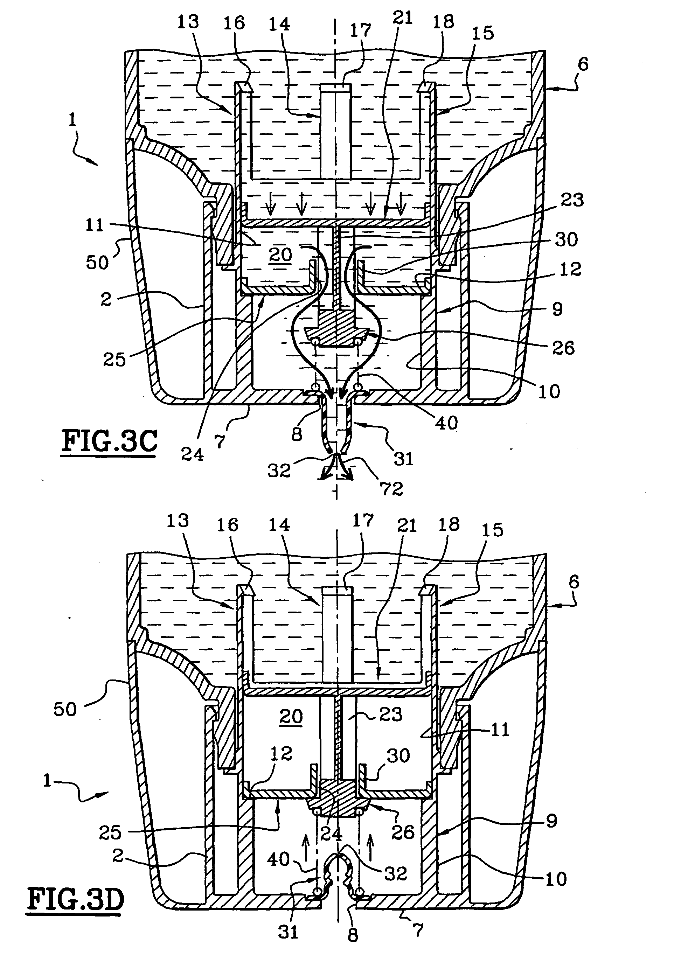

Ainsi, la cavité doseuse 20 est mobile axialement entre : a) une position haute dans laquelle le premier piston 21 est en appui contre les bourrelets 16, 17, 18 des pattes d'accrochage 13, 14, 15, et dans laquelle le second piston 25 est au voisinage de l'extrémité supérieure de la portion 11 de la jupe 9. Dans cette position, les passages d'entrée 27, 28, 29 de la chambre doseuse sont ouverts au maximum. L'organe de fermeture 26 obture l'orifice 24 traversant le piston 25 ; et b) une position basse dans laquelle le piston 25 est en appui contre l'épaulement 12, et premier piston 21 en appui contre le second piston 25. Dans cette position, la cavité doseuse 20 est de volume minimum. Entre ces deux positions extrêmes, la cavité doseuse est passée par une première phase dite "de gavage" de la cavité doseuse (figure 3B), dans laquelle les passages d'entrée 27, 28, 29 assurent la communication entre le récipient 6 et la cavité doseuse 20, au fur et à mesure que celle-ci progresse en direction de la paroi d'extrémité 7, l'orifice de sortie 24 étant obturé de manière étanche par l'organe de fermeture 26. Cette première phase se poursuit jusqu'à ce que le piston 25 arrive en butée contre l'épaulement 12. Une deuxième phase dite "de distribution" (figure 3C) succède à la phase de gavage. Au cours de cette phase, la cavité doseuse 20 est isolée du récipient 6 par le piston 21, et l'orifice de sortie 24 traversant le piston 25 est dégagé. Cette phase se poursuit jusqu'à ce que le piston 21 soit à son tour en appui contre un rebord 30 formé autour de l'orifice de sortie 24 traversant le piston 25.

La paroi d'extrémité 7 de l'embout doseur 1 est à distance telle de l'épaulement 12, que dans la position basse de la cavité doseuse 20 telle que décrite précédemment, le piston 21 puisse venir en appui contre le rebord 30 du piston 25 de manière à assurer la vidange complète de la cavité doseuse. Dans cette position, l'organe de fermeture est sensiblement au niveau de l'orifice de distribution 8 traversant la paroi d'extrémité 7.

Selon le mode de réalisation illustré, une membrane en élastomère 31 est disposée dans l'orifice de distribution 8. Une telle membrane peut être collée, claquée ou soudée tout autour de l'orifice de distribution 8. La membrane 31 comporte au moins une fente 32, fermée en l'absence de pression à l'intérieur de l'embout doseur, et apte à s'ouvrir en réponse à une pression exercée par le produit sortant de l'orifice de sortie 24 de la cavité doseuse 20.

La membrane 31 est configurée de sorte que, à la manière d'une "tétine", en réponse à une pression exercée par le produit sortant de l'orifice de sortie 24 de la cavité doseuse 20, elle présente un profil convexe tourné vers l'extérieur de l'embout doseur (voir figure 3C). Par un phénomène d'aspiration lorsque la cavité doseuse 20 retourne en position haute, et lorsque les parois reprennent leur position non déformée, la membrane 31 se retourne pour occuper un profil convexe tourné vers l'intérieur du récipient, tel que représenté à la figure 2.

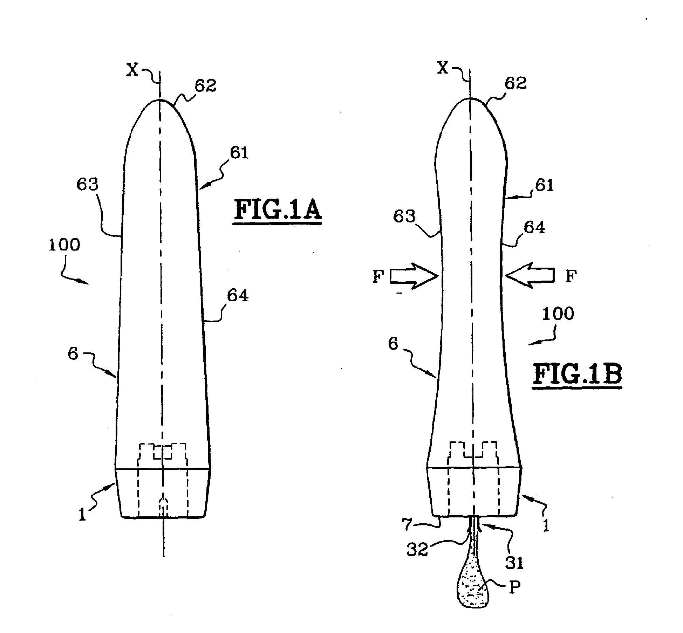

Tel que représenté aux figures 1A et 1B, l'ensemble 100 sur lequel est monté l'embout doseur 1 selon l'invention, est constitué d'un flacon 6, par exemple, en polyéthylène ou polypropylène. Le flacon 6 comporte un corps 61 fermé par un fond 62. Le corps est de section transversale allongée et est formé de deux grandes faces 63, 64, déformables "élastiquement" sous l'effet d'une pression F exercée, de la manière illustrée à la figure 1B, perpendiculairement aux grands côtés du flacon. Dans la position de distribution illustrée à la figure 1B, en réponse à une pression F exercée sur les parois du flacon, perpendiculairement à ses grandes faces, le produit P est distribué, selon un flux essentiellement axial, au travers de la fente 32 ménagée dans la membrane 31 disposée à l'intérieur de l'orifice de distribution 8 traversant la paroi d'extrémité 7. Pendant la distribution, à l'exception de la membrane 31, rien n'émerge de façon sensible au delà de la paroi d'extrémité 7.

Les figures 1A-1B, et 3A-3D auxquelles il est maintenant fait référence, illustrent le fonctionnement de l'embout doseur décrit en référence à la figure 2. En position de repos (telle que décrite en référence à la figure 3A), le récipient 6 est de préférence posé tête en bas sur une surface plane. Dans cette position, le passage de sortie 24 de la cavité doseuse 20 est obturé par l'organe de fermeture 26. Le piston 21, sollicité par le ressort 40 est en butée contre les bourrelets 16, 17, 18 des pattes d'accrochage 13, 14, 15. Les passages d'entrée 27, 28, 29 sont dégagés de sorte que la cavité doseuse 20 est en communication avec le récipient, le produit P occupant tout le volume formé autour de l'élément de liaison 23, entre les pistons 21 et 25. Le piston 25 est au voisinage de l'extrémité supérieure de la portion 11 de la jupe axiale 9 de sorte que le volume situé entre le piston 25 et la paroi d'extrémité 7 est isolé du récipient 6. Cette position de repos correspond également à celle représentée à la figure 1A.

A la figure 3B, une pression est exercée sur les parois latérales du récipient, en maintenant d'une main le récipient 7 tête en bas. Le produit P situé entre les deux pistons, et ainsi pressurisé, exerce une pression sur le piston 25, et provoque le mouvement de ce dernier en direction de la paroi d'extrémité 7. Les flux de produit pendant cette première phase sont illustrés par les flèches 70 et 71. Pendant cette phase, l'orifice de sortie 24 traversant le piston 25 est obturé par l'organe de fermeture 26. La hauteur axiale des passages d'entrée assurant la communication entre le récipient 6 et la cavité doseuse 20 diminue progressivement jusqu'à devenir sensiblement nulle lorsque le piston 25 arrive en butée contre l'épaulement 12. A ce moment, la cavité doseuse 20 est pleine et isolée du récipient 6.

Lorsque le piston 25 est en butée contre l'épaulement 12 et que la cavité doseuse 20 est isolée du récipient 6 par le piston 21, le produit sous pression contenu dans le récipient, entraîne alors le piston 21 en direction de la paroi d'extrémité 7 de l'embout doseur 1. Ce faisant, l'organe de fermeture 26 se décolle du piston 25, autorisant ainsi le passage du produit entre le bord intérieur délimitant l'orifice de sortie 24 traversant le piston 25, et l'élément de liaison 23 dont la section est en croix. Le produit sous pression provoque alors le retournement de la "tétine" 31 vers l'extérieur de l'embout doseur, et, comme illustré à la figure 3C, la sortie du produit de manière localisée (flèche 72) via la fente 32 traversant ladite membrane 31. Cette phase de distribution du produit se poursuit jusqu'à ce que le piston 21 soit en appui contre le rebord 30 du piston 25. A ce moment, la cavité doseuse est vidée dans son intégralité, à l'exception du volume situé en dessous du rebord 30, lequel volume peut être rendu aussi faible que possible en choisissant de manière convenable la configuration des pistons 21, 25, ainsi que du rebord 30.

A la figure 3D, après avoir relâché la pression exercée sur les parois 63, 64 du flacon, ces dernières reviennent dans leur position initiale. L'organe de fermeture 26, sous l'action de la force de rappel du ressort 40, sollicite le piston 21 ainsi que le piston 25 dans la direction opposée à la paroi d'extrémité 7. La dépression qui en résulte à l'intérieur du volume situé sous le piston 25 provoque le retournement de la "tétine" 31 vers l'intérieur de l'embout doseur 1 et une entrée d'air via la ou les fentes 32 qui la traversent. L'air entre également dans la cavité doseuse 20 avant que le passage de sortie 24 le piston 25 ne soit obturé, ce qui permet de compenser à l'intérieur du récipient 6, le volume de produit distribué. Lorsque le piston 21 est en butée contre les bourrelets 16, 17, 18, le mouvement de la cavité doseuse s'arrête. Le dispositif est prêt pour une nouvelle utilisation.

Dans la description détaillée qui précède, il a été fait référence à des modes de réalisation préférés de l'invention.

## Revendications

1. Embout doseur (1) d'axe X, destiné à être monté sur un récipient (6) contenant un produit, notamment cosmétique, ledit embout (1) comprenant une cavité doseuse (20) en communication sélective avec le récipient (6) via au moins un passage d'entrée (27, 28, 29), ladite cavité (20) étant mobile entre une première position et une seconde position dans laquelle elle occupe un volume minimal, ladite cavité (20) étant délimitée en partie par des premier et second pistons (21, 25), aptes à coulisser à l'intérieur d'un corps fixe (9), le premier piston (21) étant solidaire d'un organe de fermeture (26) mobile par rapport au second piston, et apte, sélectivement, à fermer/dégager au moins un orifice de sortie (24) de la cavité doseuse (20), ledit premier piston (21), lors d'une première phase du mouvement de la cavité doseuse, étant apte à être entraîné par le second (25), sous l'effet de la pression du produit s'exerçant sur ce dernier et, lors d'une seconde phase dudit mouvement de la cavité doseuse (20), apte à être entraîné par la pression du produit s'exerçant sur le premier piston (21), le second piston (25), lors de cette seconde phase, étant immobilisé en translation, **caractérisé en ce que** l'orifice de sortie est formé au travers du second piston (25).

2. Embout doseur (1) selon la revendication 1 **caractérisé en ce que** l'organe de fermeture (26) est tel que lorsque la cavité doseuse (20) retourne de la seconde à la première position, le premier piston (21) entraîne le second (25).

3. Embout doseur (1) selon la revendication 1 ou 2 **caractérisé en ce que** des moyens de rappel élastiques (40) sont prévus pour, lorsque cesse la pression du produit sur le premier piston (21), rappeler la cavité doseuse (20) dans ladite première position.

4. Embout doseur (1) selon l'une quelconque des revendications 1 à 3 **caractérisé en ce que** le passage d'entrée (27, 28, 29) de la cavité doseuse est délimité(s) au moins en partie par le premier piston (21), la cavité doseuse (20) étant en communication avec le récipient (6) lors de ladite première phase de son mouvement, et isolée du récipient (6) lors de la seconde, ledit orifice de sortie (24) étant fermé(s) lors de la première phase du mouvement, et ouvert(s) lors de la seconde.

5. Embout doseur (1) selon l'une quelconque des revendications 1 à 4 **caractérisé en ce que** le second piston (25) est immobilisé en translation par une butée (12) formée par le corps (9) de la cavité doseuse.

6. Embout doseur (1) selon l'une quelconque des revendications qui précèdent **caractérisé en ce que** l'organe de fermeture (26) est conçu de manière à autoriser une reprise d'air à l'intérieur du récipient (6) via le (ou les) orifice(s) de sortie (24) de la cavité doseuse lorsque cette dernière retourne de la seconde position à la première.

7. Embout doseur (1) selon l'une quelconque des revendications 1 à 6 **caractérisé en ce que** le produit est distribué via au moins un orifice de distribution (8) traversant une paroi d'extrémité (7) du corps de l'embout doseur, disposée en regard du second piston (25), et à distance de ce dernier lorsque la cavité doseuse (20) est dans la seconde position.

8. Embout doseur (1) selon la revendication 7 **caractérisé en ce que** l'orifice de distribution (8) est dans l'alignement de l'orifice de sortie (24) de la cavité doseuse (20).

9. Embout doseur (1) selon la revendication 7 ou 8 **caractérisé en ce que** la paroi d'extrémité (7) est à distance telle du second piston (25), que lorsque la cavité doseuse (20) est dans la seconde position, l'organe de fermeture (26) soit au plus, au niveau de ladite paroi d'extrémité (7) de l'embout doseur.

10. Embout doseur (1) selon l'une quelconque des revendications 7 à 9 **caractérisé en ce qu'**une membrane élastiquement déformable (31) est disposée dans l'orifice de distribution (8), ladite membrane (31) comportant au moins une fente (32), fermée en l'absence de pression suffisante à l'intérieur de l'embout doseur (20), et apte à s'ouvrir en réponse à une pression exercée par le produit sortant de l'orifice de sortie (24) de la cavité doseuse.

11. Embout doseur (1) selon la revendication 10 **caractérisé en ce que** ladite membrane (31) est apte, en réponse à une pression exercée par le produit sortant de l'orifice de sortie (24) de la cavité doseuse (20), à occuper un profil convexe tourné vers l'extérieur de l'embout doseur (1), et à occuper un profil convexe tourné vers l'intérieur du récipient (6) lorsque la cavité doseuse (20) retourne de la seconde position à la première.

12. Embout doseur (1) selon la revendication 10 ou 11 **caractérisé en ce que** ladite membrane (31) est réalisée en un matériau choisi parmi les élastomères thermoplastiques ou réticulés, notamment, les silicones, les latex naturels ou synthétiques, les EPDM, les polyuréthanes, les mélanges de polypropylène et de SBS, SEBS, ou EPDM, les polyéthylènes de très basse densité, les mélanges à base de polyesters glycols (TPU) ou de polyéther glycols (PEBA et COPE), les chlorures de polyvinyle souples (PVC).

13. Ensemble (100) pour le conditionnement et la distribution dosée d'un produit (P), notamment cosmétique, comprenant un récipient (6) formé d'un corps (61) dont une extrémité est fermée par un fond (62), l'autre extrémité formant un col (5) dont un bord libre délimite une ouverture, un embout doseur (1) étant monté fixement sur ledit col, **caractérisé en ce que** l'embout doseur (1) est conforme à l'une quelconque des revendications précédentes.

14. Ensemble selon la revendication 13 **caractérisé en ce que** le corps (61) présente des parois (63, 64) aptes à s'écraser lorsqu'une pression (F) est exercée sur le récipient perpendiculairement auxdites parois (63, 64), et à revenir à leur forme initiale lorsque cesse ladite pression.

15. Utilisation d'un ensemble (100) selon l'une quelconque des revendications 13 ou 14 pour le conditionnement et la distribution dosée d'un produit cosmétique, notamment un shampooing, un après shampooing, un gel de coiffage, un lait ou une crème de soin.

## Claims

1. Dosing nozzle (1), of axis X, intended to be fitted onto a container (6) containing a product, especially a cosmetic product, the said nozzle (1) comprising a dosing cavity (20) in selective communication with the container (6) via at least one inlet (27, 28, 29), the said cavity (20) being moveable between a first position and a second position in which it occupies a minimum volume, the said cavity (20) being delimited partly by first and second pistons (21, 25) capable of sliding inside a fixed body (9), the first piston (21) being integral with a closure member (26) which can move with respect to the second piston, and capable, selectively, of closing off/exposing at least one outlet (24) of the dosing cavity (20), the said first piston (21), during a first phase of the movement of the dosing cavity, being able to be entrained by the second (25) through the effect of the pressure of the product being exerted on the latter and, during a second phase of the said movement of the dosing cavity (20), able to be entrained by the pressure of the product being exerted on the first piston (21), the second piston (25), during this second phase, being immobilized in translation, **characterized in that** the outlet is formed via the second piston (25).

2. Dosing nozzle (1) according to Claim 1, **characterized in that** the closure member (26) is such that, when the dosing cavity (20) returns from the second to the first position, the first piston (21) entrains the second (25).

3. Dosing nozzle (1) according to Claim 1 or 2, **characterized in that** elastic return means (40) are provided in order, when the pressure of the product on the first piston (21) ceases, to return the dosing cavity (20) into the said first position.

4. Dosing nozzle (1) according to any one of Claims 1 to 3, **characterized in that** the inlet (27, 28, 29) of the dosing cavity is or are delimited at least partly by the first piston (21), the dosing cavity (20) being in communication with the container (6) during the said first phase of its movement and isolated from the container (6) during the second, the said outlet (24) being closed during the first phase of the movement and open during the second.

5. Dosing nozzle (1) according to any one of Claims 1 to 4, **characterized in that** the second piston (25) is immobilized in translation by a stop (12) formed by the body (9) of the dosing cavity.

6. Dosing nozzle (1) according to any one of the preceding claims, **characterized in that** the closure member (26) is designed so as to allow air to be taken inside the container (6) via the outlet or outlets (24) of the dosing cavity when the latter returns from the second position to the first position.

7. Dosing nozzle (1) according to any one of Claims 1 to 6, **characterized in that** the product is dispensed via at least one dispensing hole (8) traversing an end wall (7) of the body of the dosing nozzle, arranged opposite the second piston (25) and at a distance from the latter when the dosing cavity (20) is in the second position.

8. Dosing nozzle (1) according to Claim 7, **characterized in that** the dispensing hole (8) is in line with the outlet (24) of the dosing cavity (20).

9. Dosing nozzle (1) according to Claim 7 or 8, **characterized in that** the end wall (7) is at a distance from the second piston (25) such that, when the dosing cavity (20) is in the second position, the closure member (26) is at most level with the said end wall (7) of the dosing nozzle.

10. Dosing nozzle (1) according to any one of Claims 7 to 9, **characterized in that** an elastically deformable membrane (31) is arranged in the dispensing hole (8), the said membrane (31) including at least one slot (32), closed in the absence of sufficient pressure inside the dosing nozzle (20) and capable of opening in response to a pressure exerted by the product exiting the outlet (24) of the dosing cavity.

11. Dosing nozzle (1) according to Claim 10, **characterized in that** the said membrane (31) is capable, in response to a pressure exerted by the product being expelled from the outlet (24) of the dosing cavity (20), of occupying a convex profile facing towards the outside of the dosing nozzle (1) and of occupying a convex profile facing towards the inside of the container (6) when the dosing cavity (20) returns from the second position to the first.

12. Dosing nozzle (1) according to Claim 10 or 11, **characterized in that** the said membrane (31) is produced from a material chosen from thermoplastic or crosslinked elastomers, in particular silicones, natural or synthetic latexes, EPDMs, polyurethanes, mixtures of polypropylene and of SBS, SEBS or EPDM, very-low-density polyethylenes, mixtures based on polyester glycols (TPU) or polyether glycols (PEBA and COPE), or flexible polyvinyl chlorides (PVC).

13. Assembly (100) for the packaging and dosed dispensing of a product (P), especially a cosmetic product, comprising a container (6) formed from a body (61), one end of which is closed by a base (62), the other end forming a neck (5), a free edge of which delimits an opening, a dosing nozzle (1) being fitted securely onto the said neck, **characterized in that** the dosing nozzle (1) is in accordance with any one of the preceding claims.

14. Assembly according to Claim 13, **characterized in that** the body (61) has walls (63, 64) capable of being squashed when a pressure (F) is exerted on the container perpendicularly to the said walls (63, 64) and of returning to their initial shape when the said pressure ceases.

15. Use of an assembly (100) according to either of Claims 13 and 14 for the packaging and dosed dispensing of a cosmetic product, especially a shampoo, a conditioner, a hair gel, or a beauty-care cream or milk.

## Patentansprüche

1. Dosieraufsatz (1) mit einer Achse X, der dazu bestimmt ist, auf einen Behälter (6) montiert zu werden, der ein insbesondere kosmetisches Produkt enthält, wobei der Aufsatz (1) einen Dosierhohlraum (20) aufweist, der über mindestens einen Eingangsdurchlass (27, 28, 29) mit dem Behälter (6) in selektiver Verbindung steht, wobei der Hohlraum (20) zwischen einer ersten Stellung und einer zweiten Stellung beweglich ist, in der er ein minimales Volumen einnimmt, wobei der Hohlraum (20) zum Teil von ersten und zweiten Kolben (21, 25) begrenzt wird, die fähig sind, im Inneren eines ortsfesten Körpers (9) zu gleiten, wobei der erste Kolben (21) fest mit einem Verschlussorgan (26) verbunden ist, das bezüglich des zweiten Kolbens beweglich und fähig ist, mindestens eine Austrittsöffnung (24) des Dosierhohlraums (20) zu verschließen/freizulegen, wobei der erste Kolben (21) in einer ersten Phase der Bewegung des Dosierhohlraums vom zweiten Kolben (25) unter der Wirkung des Drucks des Produkts, der auf diesen letzteren ausgeübt wird, angetrieben werden kann, und während einer zweiten Phase der Bewegung des Dosierhohlraums (20) von dem Druck des Produkts angetrieben werden kann, der auf den ersten Kolben (21) ausgeübt wird, wobei der zweite Kolben (25) in dieser zweiten Phase in Translationsrichtung blockiert ist, **dadurch gekennzeichnet, dass** die Austrittsöffnung durch den zweiten Kolben (25) hindurch geformt ist.

2. Dosieraufsatz (1) nach Anspruch 1, **dadurch gekennzeichnet, dass** das Verschlussorgan (26) so ist, dass, wenn der Dosierhohlraum (20) von der zweiten in die erste Stellung zurückkehrt, der erste Kolben (21) den zweiten (25) antreibt.

3. Dosieraufsatz (1) nach Anspruch 1 oder 2, **dadurch gekennzeichnet, dass** elastische Rückstellmittel (40) vorgesehen sind, um, wenn der Druck des Produkts auf den ersten Kolben (21) endet, den Dosierhohlraum (20) in die erste Stellung zurückzubringen.

4. Dosieraufsatz (1) nach einem der Ansprüche 1 bis 3, **dadurch gekennzeichnet, dass** der Eingangsdurchlass (27, 28, 29) des Dosierhohlraums zumindest zum Teil vom ersten Kolben (21) begrenzt wird, wobei der Dosierhohlraum (20) in der ersten Phase seiner Bewegung mit dem Behälter (6) in Verbindung steht und in der zweiten von dem Behälter (6) isoliert ist, wobei die Austrittsöffnung (24) in der ersten Phase der Bewegung verschlossen und in der zweiten offen ist.

5. Dosieraufsatz (1) nach einem der Ansprüche 1 bis 4, **dadurch gekennzeichnet, dass** der zweite Kolben (25) von einem Anschlag (12) in Translationsrichtung blockiert wird, der von dem Köper (9) des Dosierhohlraums geformt wird.

6. Dosieraufsatz (1) nach einem der vorhergehenden Ansprüche, **dadurch gekennzeichnet, dass** das Verschlussorgan (26) so konzipiert ist, dass es eine Luftaufnahme ins Innere des Behälters (6) über die Austrittsöffnung(en) (24) des Dosierhohlraums erlaubt, wenn dieser letztere aus der zweiten in die erste Stellung zurückkehrt.

7. Dosieraufsatz (1) nach einem der Ansprüche 1 bis 6, **dadurch gekennzeichnet, dass** das Produkt über mindestens eine Ausgabeöffnung (8) ausgegeben wird, die eine Endwand (7) des Körpers des Dosieraufsatzes durchquert, die gegenüber dem zweiten Kolben (25) und in Abstand zu diesem angeordnet ist, wenn der Dosierhohlraum (20) in der zweiten Stellung ist.

8. Dosieraufsatz (1) nach Anspruch 7, **dadurch gekennzeichnet, dass** die Ausgabeöffnung (8) mit der Austrittsöffnung (24) des Dosierhohlraums (20) fluchtet.

9. Dosieraufsatz (1) nach Anspruch 7 oder 8, **dadurch gekennzeichnet, dass** die Endwand (7) einen solchen Abstand zum zweiten Kolben (25) hat, dass, wenn der Dosierhohlraum (20) in der zweiten Stellung ist, das Verschlussorgan (26) sich höchstens auf der Ebene der Endwand (7) des Dosieraufsatzes befindet.

10. Dosieraufsatz (1) nach einem der Ansprüche 7 bis 9, **dadurch gekennzeichnet, dass** eine elastisch verformbare Membran (31) in der Ausgabebeöffnung (8) angeordnet ist, wobei die Membran (31) mindestens einen Schlitz (32) aufweist, der in Abwesenheit eines ausreichenden Drucks im Inneren des Dosieraufsatzes (20) geschlossen und fähig ist, sich als Reaktion auf einen Druck zu öffnen, der von dem aus der Austrittsöffnung (24) des Dosierhohlraums austretenden Produkt ausgeübt wird.

11. Dosieraufsatz (1) nach Anspruch 10, **dadurch gekennzeichnet, dass** die Membran (31) fähig ist, als Reaktion auf einen von dem aus der Austrittsöffnung (24) des Dosierhohlraums (20) austretenden Produkt ausgeübten Druck ein zur Außenseite des Dosieraufsatzes (1) gerichtetes konvexes Profil einzunehmen, und ein zum Inneren des Behälters (6) gerichtetes konvexes Profil einzunehmen, wenn der Dosierhohlraum (20) von der zweiten in die erste Stellung zurückkehrt.

12. Dosieraufsatz (1) nach Anspruch 10 oder 11, **dadurch gekennzeichnet, dass** die Membran (31) aus einem Werkstoff hergestellt ist, der ausgewählt wird unter den thermoplastischen oder vernetzten Elastomermaterialien, insbesondere den Silikonen, den natürlichen oder synthetischen Latexmaterialien, den EPDM, den Polyurethanen, den Mischungen von Polypropylen und SBS, SEBS oder EPDM, den Polyethylenen sehr niederer Dichte, den Mischungen auf der Basis von Polyesterglycolen (TPU) oder von Polyetherglycolen (PESA und COPE), den weichen Polyvinylchloriden (PVC).

13. Einheit (100) zur Verpackung und zur dosierten Ausgabe eines insbesondere kosmetischen Produkts (P), die einen Behälter (6) aufweist, der von einem Körper (61) geformt wird, von dem ein Ende von einem Boden (62) verschlossen wird, während das andere Ende einen Hals (5) bildet, von dem ein freier Rand eine Öffnung begrenzt, wobei ein Dosieraufsatz (1) ortsfest auf den Hals montiert ist, **dadurch gekennzeichnet, dass** der Dosieraufsatz (1) einem der vorhergehenden Ansprüche entspricht.

14. Einheit nach Anspruch 13, **dadurch gekennzeichnet, dass** der Körper (61) Wände (63, 64) aufweist, die zusammengedrückt werden können, wenn ein Druck (F) auf den Behälter lotrecht zu den Wänden (63, 64) ausgeübt wird, und in ihre Ursprungsform zurückkommen können, wenn der Druck endet.

15. Verwendung einer Einheit (100) nach einem der Ansprüche 13 oder 14 zur Verpackung und zur dosierten Ausgabe eines Kosmetikprodukts, insbesondere eines Shampoos, einer Spülung, eines Frisiergels, einer Milch oder einer Pflegecreme.
